# EUROPEAN PATENT APPLICATION

(11) **EP 2 671 753 A1**
(43) Date of publication of application: **11.12.2013**
(21) Application number: 12170763.2
(22) Date of filing: 04.06.2012
(51) Int. Cl.: B60N 3/04

(54) **Driving safety assembly**

(71) Applicant: Wang, Shun-Shen, Taoyuan County 320 (TW)
(72) Inventor: Wang, Shun-Shen, Taoyuan County 320 (TW)
(74) Representative: Chaillot, Geneviève

(57) **Abstract**

A driving safety assembly contains an anti-slip foot mat and an auxiliary illumination device, the anti-slip foot mat including a body having two through holes to insert through two ropes which are connected with a screw element on a bottom end of a seat, hence the anti-slip foot mat is fixed securely. Thereby, the body is connected with the screw element of the seat by ways of the two ropes or the retaining member, thus prevent the anti-slip foot mat from sliding during driving a car.

## Description

### FIELD OF THE INVENTION

The present invention relates to a driving safety assembly in which the body is connected with the screw element of the seat by ways of the two ropes or the retaining member to prevent the anti-slip foot mat from sliding during driving a car and in which the two auxiliary lights are capable of providing an illumination at a blind angle during turning the car.

### BACKGROUND OF THE INVENTION

Conventional foot mat fixed in a car is movable, so it is easy to slide with a movement of the foot. When the driver moves foot, the foot mat will move to push or stop the gas pedal, thus accelerating or braking the car suddenly to cause a danger.

Furthermore, when turning the car at a corner of a road, the driver can not have enough light to see the driving circumstance clearly, thus causing the danger as well.

The present invention has arisen to mitigate and/or obviate the afore-described disadvantages.

### SUMMARY OF THE INVENTION

The primary object of the present invention is to provide a driving safety assembly in which the body is connected with the screw element of the seat by ways of the two ropes or the retaining member to prevent the anti-slip foot mat from sliding during driving a car and in which the two auxiliary lights are capable of providing an illumination at a blind angle during turning the car.

To obtain the above objectives, a driving safety assembly contains:
an anti-slip foot mat and an auxiliary illumination device, the anti-slip foot mat including a body having two through holes to insert through two ropes which are connected with a screw element on a bottom end of a seat, hence the anti-slip foot mat is fixed securely.

In addition, the anti-slip foot mat may include a retaining member used to fix the body; wherein
the body includes an extending rib fixed on a peripheral side thereof, and the retaining member has a retaining section extending upward therefrom and a locking orifice defined on a rear end thereof to screw with a screw element of a seat.

Also, the auxiliary illumination device may include two auxiliary lights disposed on a front end of a car or on two rearview mirrors of the car;
wherein the two auxiliary lights are powered on to illuminate when turning on a headlamps; and
when a turning light is started, the two auxiliary lights are powered on with starting the turning light.

The foregoing, as well as additional objects, features and advantages of the invention will be more readily apparent from the following detailed description, which proceeds with reference to the accompanying drawings.

### BRIEF DESCRIPTION OF THE DRAWINGS

Fig. 1 is a perspective view showing the assembly of a driving safety assembly according to a first embodiment of the present invention.
Fig. 2 is a cross sectional view showing the assembly of the driving safety assembly according to the first embodiment of the present invention.
Fig. 3 is a perspective view showing the assembly of a driving safety assembly according to a second embodiment of the present invention.
Fig. 4 is a perspective view showing the assembly of a retaining member of the driving safety assembly according to the second embodiment of the present invention.
Fig. 5 is a cross sectional view showing the assembly of the driving safety assembly according to the second embodiment of the present invention.
Fig. 6 is a perspective view showing the operation of an auxiliary illumination device of a driving safety assembly according to a third embodiment of the present invention.
Fig. 7 is a cross sectional view showing the operation of the auxiliary illumination device of the driving safety assembly according to the third embodiment of the present invention.
Fig. 8 is a flow chart showing the operating process of the auxiliary illumination device of the driving safety assembly according to the third embodiment of the present invention.
Fig. 9 is another flow chart showing the operating process of the auxiliary illumination device of the driving safety assembly according to the third embodiment of the present invention.

### DETAILED DESCRIPTION OF THE PREFERRED

### EMBODIMENTS

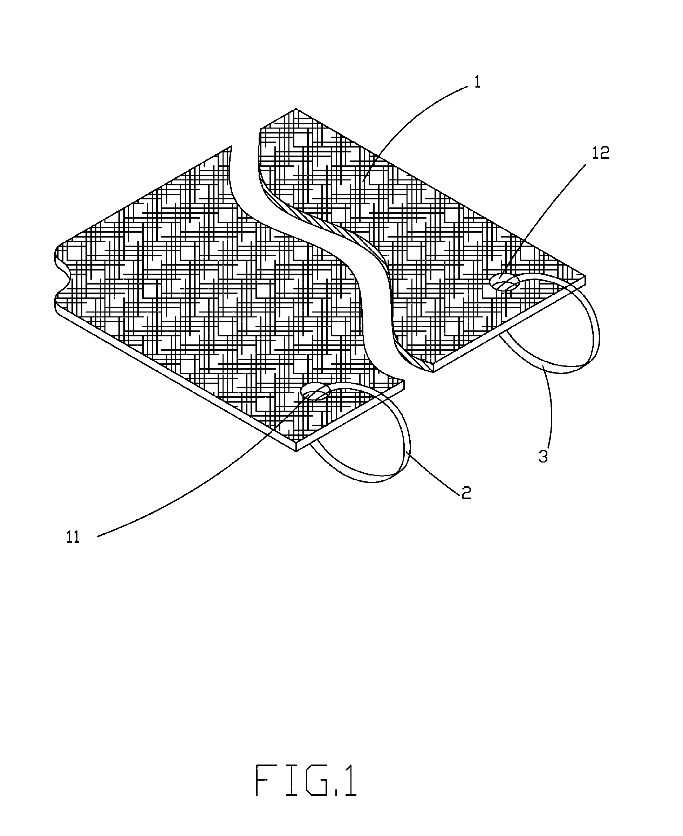

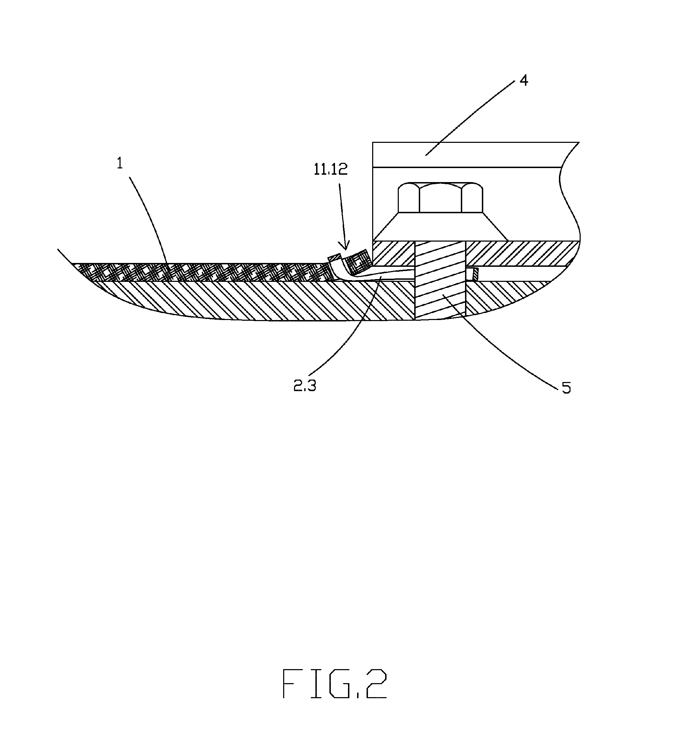

Fig. 1 is a perspective view showing the assembly of a driving safety assembly according to a first embodiment of the present invention, and Fig. 2 is a cross sectional view showing the assembly of the driving safety assembly according to the first embodiment of the present invention. With reference to Figs. 1 and 2, the driving safety assembly comprises an anti-slip foot mat with a body 1 having two through holes 11, 12 to insert through two ropes 2, 3 which are connected with a screw element 5 on a bottom end of a seat 4, hence the anti-slip foot mat is fixed securely.

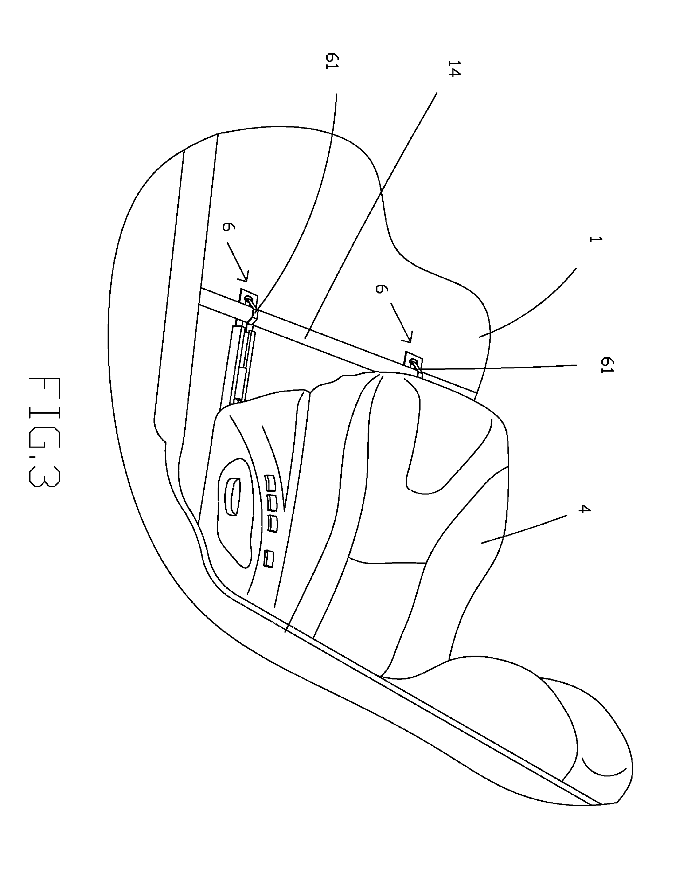

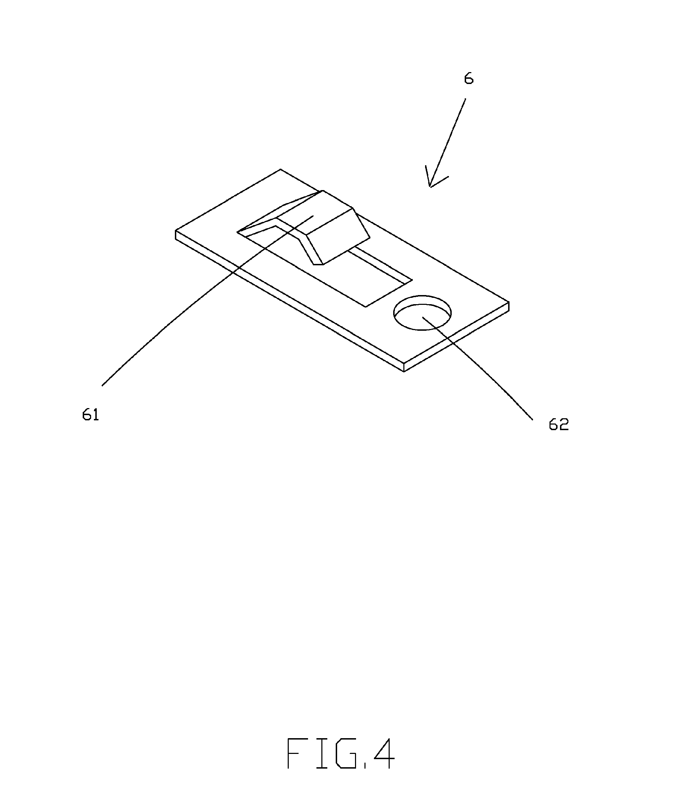

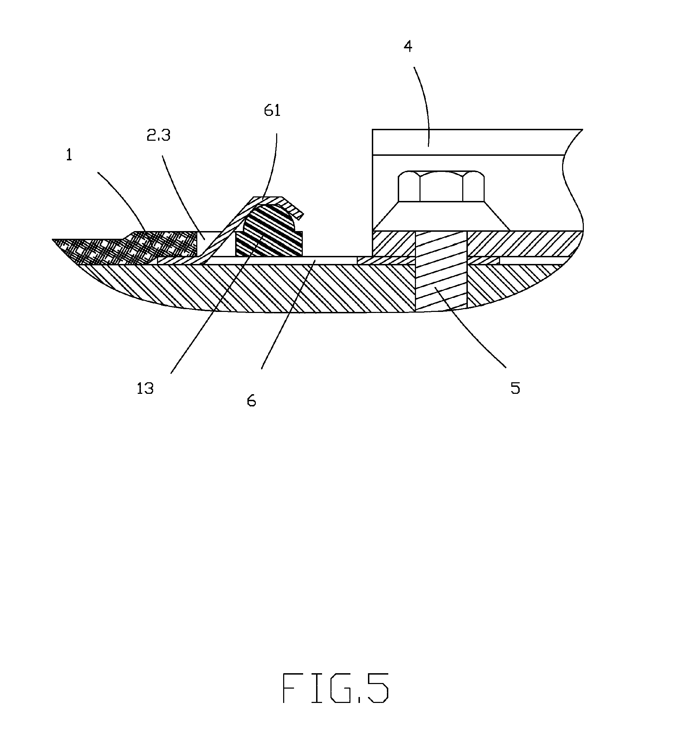

Fig. 3 is a perspective view showing the assembly of a driving safety assembly according to a second embodiment of the present invention, Fig. 4 is a perspective view showing the assembly of a retaining member of the driving safety assembly according to the second embodiment of the present invention, and Fig. 5 is a cross sectional view showing the assembly of the driving safety assembly according to the second embodiment of the present invention. Referring to Figs. 4-5, the driving safety assembly comprises a anti-slip foot mat having a body 1, an extending rib 13 fixed on a peripheral side of the body 1 adjacent to a seat 4, and the retaining member 6 used to fix the body 1 and having a retaining section 61 extending upward therefrom, wherein the retaining section 61 inserts through the two through holes 11, 12 and retains with the extending rib 13, the retaining member 6 also includes a locking orifice 62 defined on a rear end thereof to screw with the screw element 5 of the seat 4.

Thereby, the body 1 is connected with the screw element 5 of the seat 4 by ways of the two ropes 2, 3 or the retaining member 6, thus prevent the anti-slip foot mat from sliding during driving a car.

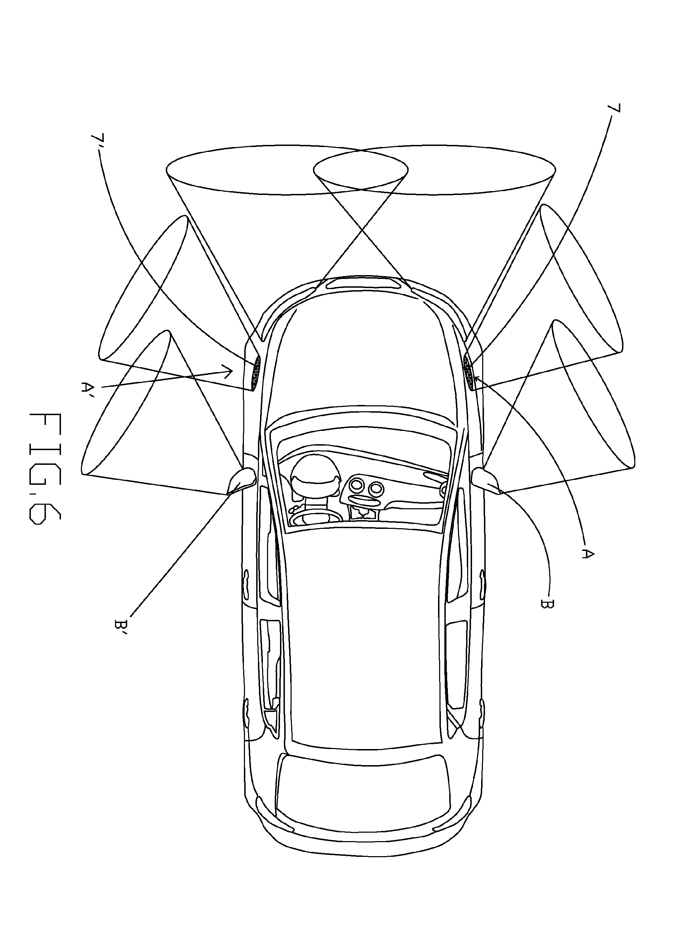

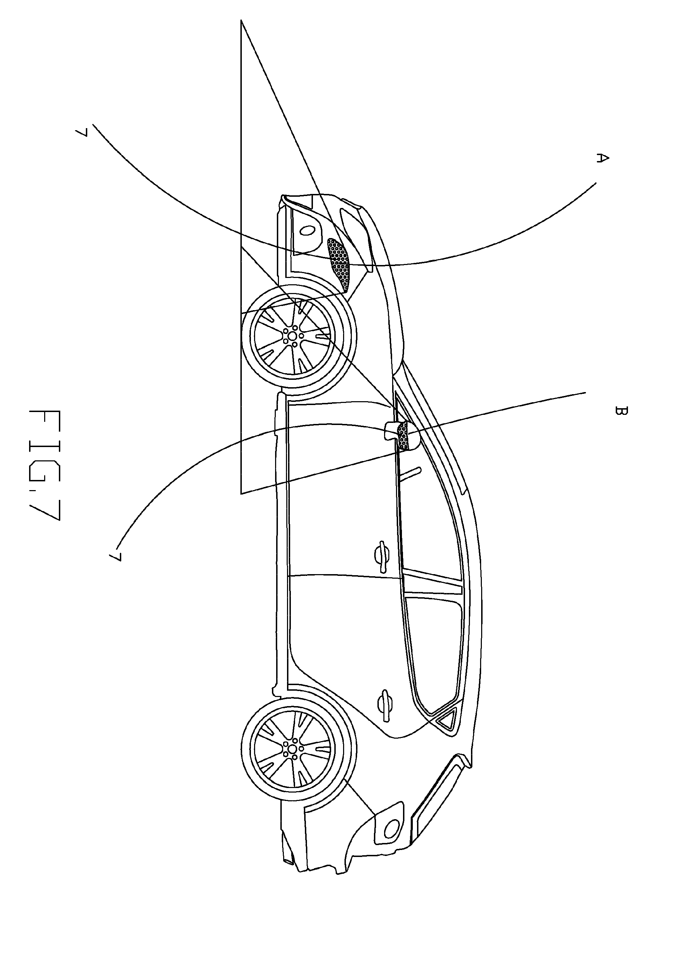

Fig. 6 is a perspective view showing the operation of an auxiliary illumination device of a driving safety assembly according to a third embodiment of the present invention. Fig. 7 is a cross sectional view showing the operation of the auxiliary illumination device of the driving safety assembly according to the third embodiment of the present invention. The driving safety assembly comprises two auxiliary lights 7, 7' disposed on a front end of the car or on two rearview mirrors B, B' of the car.

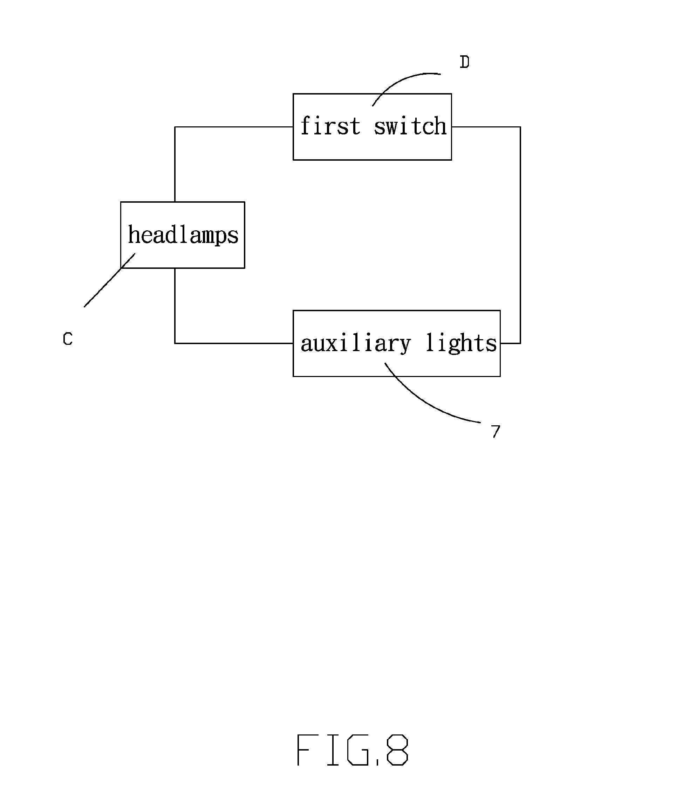

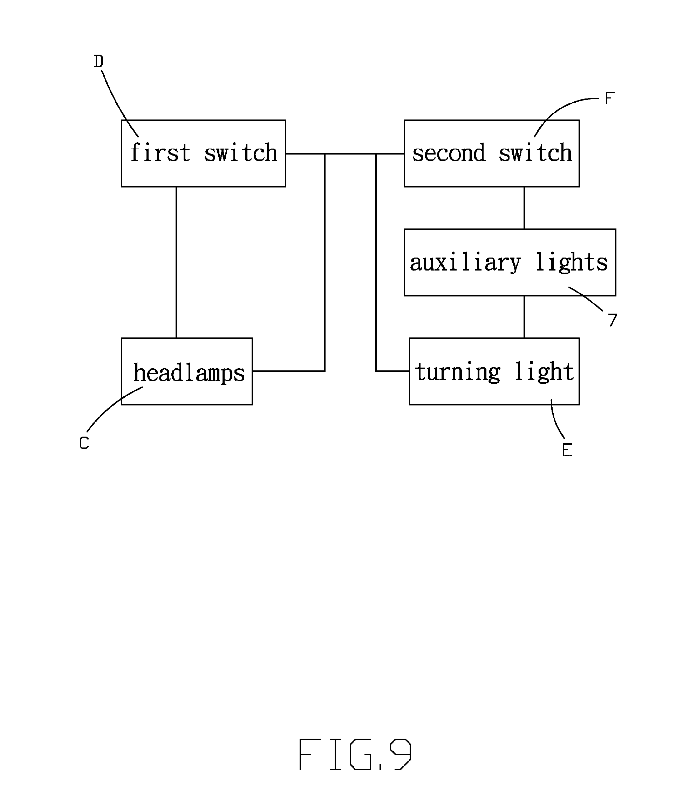

Figs. 8 and 9 are a flow chart showing the operating process of the auxiliary illumination device of the driving safety assembly according to the third embodiment of the present invention. To enhance an operation flexibility, the two auxiliary lights 7, 7' are powered on to illuminate when turning on a first switch D of a headlamps C; when turning off the headlamps C, the two auxiliary lights 7, 7' are simultaneously powered off (as shown in Fig. 8). In addition, when a second switch F of a turning light E is started by turning on the first switch D of the headlamps C, the two auxiliary lights 7, 7' are powered on with starting the turning light E; and when turning off the second switch F of the turning light E, the two auxiliary lights 7, 7' are powered on with turning off the turning light E (as shown in Fig. 9). Thereby, the two auxiliary lights 7, 7' are capable of providing an illumination at a blind angle during turning the car.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A driving safety assembly comprising an anti-slip foot mat and an auxiliary illumination device, the anti-slip foot mat including a body (1) having two through holes (11, 12) to insert through two ropes (2, 3) which are connected with a screw element (5) on a bottom end of a seat (4), hence the anti-slip foot mat is fixed securely.

2. A driving safety assembly according to claim 1, the anti-slip foot mat including a retaining member (6) used to fix the body (1); wherein
the body (1) includes an extending rib (13) fixed on a peripheral side thereof, and the retaining member (6) has a retaining section (61) extending upward therefrom and a locking orifice (62) defined on a rear end thereof to screw with the screw element (5) of a seat (4).

3. A driving safety assembly according to anyone of claims 1 and 2, the auxiliary illumination device including two auxiliary lights (7, 7') disposed on a front end of a car or on two rearview mirrors of the car;
wherein the two auxiliary lights (7, 7') are powered on to illuminate when turning on a headlamps; and when a turning light (E) is started, the two auxiliary lights (7, 7') are powered on with starting the turning light (E).
